# EUROPÄISCHE PATENTANMELDUNG

(11) **EP 4 361 209 A1**
(43) Veröffentlichungstag der Anmeldung: **01.05.2024**
(21) Anmeldenummer: 22203983.6
(22) Anmeldetag: 27.10.2022
(51) Int. Cl.: C08K 5/29, C08L 67/02

(54) **HYDROLYSESTABILISIERTE POLYESTER-HALTIGE ZUSAMMENSETZUNGEN**

(71) Anmelder: LANXESS Deutschland GmbH, 50569 Köln (DE)
(72) Erfinder: LAUFER, Wilhelm, 67158 Ellerstadt (DE)

(57) **Zusammenfassung**

Die Erfindung betrifft hydrolysestabilisierte Polyethylenterephthalat (PET)- und/oder Polymilchsäure (PLA)- haltige Zusammensetzungen enthaltend monomere Carbodiimide der Formel (I) 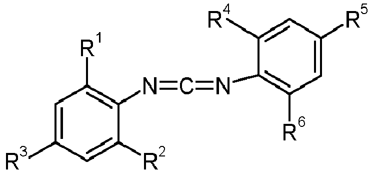 mit R¹, R², R⁴ und R⁶ = Ethyl und
R³, R⁵ gleich oder unabhängig voneinander, C₁-C₆-Alkyl,
sowie Verfahren zur Herstellung und die Verwendung von diesen Carbodiimiden.

## Beschreibung

Die Erfindung betrifft hydrolysestabilisierte Polyester-haltige Zusammensetzungen wie Polyethylenterephthalat (PET)-haltige und Polymilchsäure (PLA)-haltige Zusammensetzungen, Verfahren zur Herstellung und deren Verwendung.

PET wird für Fasern, für Formmassen zur Herstellung von Kunststoffteilen, wie z.B. Getränkeflaschen sowie zur Herstellung von Folien, z.B. für elektrische Isolierungen und Solarzellen, verwendet.

PET, das vom Hersteller für die Weiterverarbeitung in der Regel in Granulatform geliefert wird, weist einen Wassergehalt in der Größenordnung von 0,2 bis 0,4% (2000 bis 4000 ppm) auf, wobei der Gehalt an Feuchtigkeit und seine Verteilung auf der Oberfläche des Granulats und im Inneren des Granulats von der Kristallinität des PET im Granulat und seiner Zusammensetzung abhängen.

Da der "natürliche" Feuchtigkeitsgehalt eines kommerziellen PET-Granulats bei der Herstellung einer PET-Schmelze zu einem hydrolytischen PET-Abbau führt und sich dies auf die Qualität der erhaltenen Endprodukte auswirkt, ist es zur Herstellung hochwertiger PET-Erzeugnisse üblich, das vom Hersteller erhaltene feuchte PET-Granulat einer Kristallisation durch Erwärmen sowie einer nachfolgenden gründlichen Trocknung zu unterziehen. Insbesondere, wenn biaxial gereckte PET-Folien als Kondensatorfolien, Folien für magnetische Aufzeichnungsmedien, Röntgenfilmunterlagen oder für graphische Zwecke bestimmt sind, werden Folien mit ausgezeichneten optischen und mechanischen Eigenschaften bei hoher Oberflächengüte und hoher Homogenität benötigt. Um diese Eigenschaften zu erzielen, muss der hydrolytische Abbau während der Verarbeitung so wirksam wie möglich begrenzt werden.

PET ist insbesondere in der Schmelze bei hohen Temperaturen empfindlich gegenüber Hydrolyse. Fertige Artikel aus festem, erstarrtem PET sind dagegen kaum nennenswert feuchtigkeitsempfindlich. Es ist jedoch üblich, PET, zur Verhinderung einer Verschlechterung der Faserqualität während der Nutzungsdauer des daraus gefertigten Gewebes, ein Hydrolyseschutzmittel zuzugeben, das insbesondere Carbodiimid-Gruppen enthält und in der Regel polymerer Natur ist. Die Polycarbodiimid-Verbindung liegt in homogener Verteilung in Mengen von etwa 1 bis 2,5 Gew.-% in der fertigen PET-Faser vor und bindet in die Faser eindringende Wasserspuren, die zu einer partiellen PET-Hydrolyse unter allmählicher Verschlechterung der Qualität führen könnten. Derartige Hydrolyseschutzmittel dienen ausschließlich der Verbesserung der Langzeitstabilität der fertigen PET-Produkte.

Die polymeren Carbodiimide haben allerdings Nachteile gegenüber den monomeren Carbodiimiden, da sie sich bei tieferen Temperaturen weniger reaktiv sind und sich nur schwer unter Verwendung von speziellem technischem Equipment unter schärferen Prozessbedingungen in die Polymermatrix dispergieren lassen.

Einige monomere Carbodiimide, wie z. B. das 2,6-Bis(diisopropylcarbodiimid), haben wiederum den Nachteil, dass sie toxisch sind oder deren Wirkung nicht ausreichend ist. Weitere monomere aromatische Carbodiimide, die eine starke sterische Hinderung aufzeichnen, wirken sehr gut im PET müssen aber erst wie z. B. im EP 3686240 mittels zusätzlich nachgeschalteten aufwendigen und teuren Aufreinigungsprozessen wie z. B. Umkristallisationen oder Mehrfachdestillationen hergestellt werden. Monomere Carbodiimide mit geringerer sterische Hinderung wie in CN 108912014 beschrieben, sind zwar sehr reaktiv als Säurefänger im Polyesterpolyolen zeigen aber einen ungenügenden Langzeit-Hydrolyseschutz in PET.

Auch in den meisten biobasierten aliphatischen Polyestern wie z. B. Polymilchsäure (Polylactiden, PLA) zeigen dagegen die meisten monomeren Carbodiimide alleine keine ausreichende Wirkung.

Aufgabe der vorliegenden Erfindung war daher, verbesserte hydrolysestabilisierte PET- und PLA-Zusammensetzungen bereitzustellen, welche die vorgenannten Nachteile nicht aufweisen, d. h. eine sehr gute Schutzwirkung gegen Hydrolyse zeigen, leicht und kostengünstig herzustellen und nicht giftig sind.

Überraschenderweise konnte diese Aufgabe gelöst werden durch Zusammensetzung enthaltend Polyethylenterephthalat (PET) und/oder Polymilchsäure (PLA) und mindestens ein monomeres Carbodiimid der Formel (I) 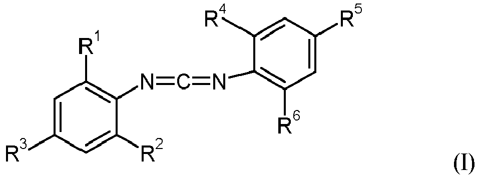
wobei R¹, R², R⁴ und R⁶ Ethyl und
R³, R⁵ gleich oder unabhängig voneinander, C₁-C₆-Alkyl bedeuten.

Die C₁-C₆-Alkylreste der eingesetzten Carbodiimide der Formel (I) können dabei linear und/oder verzweigt sein.

In einer bevorzugten Ausführungsform sind R³ und R⁵ unabhängig voneinander ausgewählt aus t-Butyl, i-Propyl oder Methyl.

In einer besonders bevorzugten Ausführungsform sind R³ und R⁵ jeweils Methyl, d.h. das Carbodiimid entspricht Formel (II):

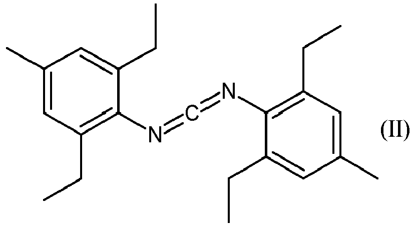

Ein weiterer Gegenstand der vorliegenden Erfindung ist die Verwendung der obigen monomeren Carbodiimide der Formel (I) zur Hydrolysestabilisierung von PLA und/oder PET.

Die bei der vorliegenden Erfindung eingesetzten Carbodiimide haben vorzugsweise einen NCN-Gehalt von 8 bis 13 Gew.% bevorzugt 11 bis 13 Gew.-%.

Diese bei der vorliegenden Erfindung verwendeten Carbodiimide sind vorzugsweise herstellbar durch Carbodiimidisierung von trisubstituierten Benzolisocyanaten der Formeln (III) und (IV) 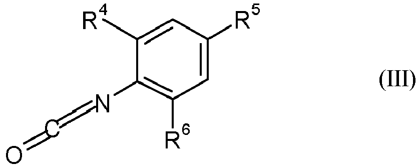 und 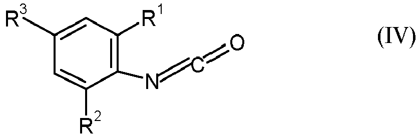
wobei R¹, R², R⁴ und R⁶ Ethyl und
R³, R⁵ gleich oder unabhängig voneinander, C₁-C₆-Alkyl, bevorzugt t-Butyl, i-Propyl oder Methyl und meist bevorzugt Methyl bedeuten,
unter Abspaltung von Kohlendioxid bei Temperaturen von 40 °C bis 200 °C in Gegenwart von Katalysatoren und gegebenenfalls Lösungsmittel.

Als bevorzugtes trisubstituiertes Benzolisocyanat wird 2,6-Diethyl-4-methylphenylisocyanat eingesetzt. Die für deren Herstellung notwendigen trisubstituierten Benzolamine können - wie dem Fachmann bekannt - über eine Friedel-Crafts Alkylierung von Anilin mit dem entsprechenden Alken, Halogenalkan, Halogenalkenbenzol und/oder Halogencycloalkan hergestellt werden. Anschließend werden diese mit Phosgen zum entsprechenden trisubstituierten Benzolisocyanat umgesetzt.

Die Carbodiimidisierung erfolgt dabei vorzugsweise gemäß der in Angew. Chem. 93, S. 855 - 866 (1981) oder DE-A-11 30 594 oder Tetrahedron Letters 48 (2007), S. 6002 - 6004 beschriebenen Verfahren.

Als Katalysatoren für die Herstellung der Verbindungen der Formel (I) werden in einer bevorzugten Ausführungsform der Erfindung starke Basen oder Phosphorverbindungen verwendet. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Alkali-, Erdalkalioxide oder -Hydroxide, -Alkoholate oder -Phenolate, Carbonsäuremetallsalze und nicht basische Organometallverbindungen verwendet werden.

Die Carbodiimidisierung kann sowohl in Substanz als auch in einem Lösemittel durchgeführt werden.

Ebenfalls möglich ist auch die Herstellung der im erfindungsgemäßen Verfahren einzusetzenden Carbodiimide aus den entsprechenden trisubstituierten Anilinen durch Umsetzung mit CS₂ zum Thioharnstoffderivat und anschließender Umsetzung in basischen Hypochlorit-Lösungen zum Carbodiimid oder nach den in EP 0597382 A beschriebenen Verfahren.

Die Reinigung der Rohprodukte erfolgt vorzugsweise mittels einer Destillation. In einer weiteren bevorzugten Ausführungsform kann vor oder nach, besonders bevorzugt nach der Destillation des Carbodiimids eine Extraktion mit Lösemittel durchgeführt werden. Als geeignete Lösemittel werden vorzugsweise Alkohole, Ketone, Nitrile, Ether, Ester oder Mischungen dieser Substanzen eingesetzt. Besonders bevorzugt werden Alkohole aus der Gruppe der aliphatischen Monoalkohole wie z. B. Methanol, Ethanol oder Isopropanol, meist bevorzugt Methanol verwendet.

Bei der Extraktion wird typischerweise zuerst das Carbodiimid bei Temperaturen von bevorzugt 40 - 80 °C, besonders bevorzugt bei 50 - 60 °C in mindestens einem Lösemittel gerührt. Unter Rühren wird dann auf bevorzugt 10 - 25 °C, besonders bevorzugt auf 15 - 20 °C abgekühlt. Anschließend werden die zwei flüssigen Phasen abgetrennt. Das Carbodiimid wird dann in einem Rührkessel bevorzugt bei 50 - 100 °C vom Restlösemittel destillativ befreit und als Flüssigkeit abgefüllt.

In einer weiteren Ausführungsform wird zusätzlich zur Destillation eine Umkristallisation nach der Destillation durchgeführt. Als geeignete Lösemittel für die Umkristallisation werden vorzugsweise Alkohole, bevorzugt Mischungen dieser Substanzen eingesetzt. Besonders bevorzugt werden Alkohole aus der Gruppe der aliphatischen Monoalkohole wie z. B. Methanol, Ethanol oder Isopropanol.

Zur Herstellung der erfindungsgemäßen Zusammensetzung werden PET und/oder PLA und monomeres Carbodiimid der Formel (I) bevorzugt mittels Feststoffdosier- und Mischaggregaten vermischt.

Feststoffdosier- und Mischaggregate im Sinne der Erfindung sind: Ein-, Zwei- und Mehrwellenextruder, kontinuierlich arbeitende Ko-Kneter (Typ Buss) und diskontinuierlich arbeitende Kneter, z.B. Typ Banbury und andere in der Polymerindustrie üblichen Aggregate.

Die Konzentration der Carbodiimide der Formel (I) bezogen auf die Gesamtmenge an PET und/oder PLA in den erfindungsgemäßen Zusammensetzungen bzw. bei der erfindungsgemäßen Verwendung beträgt typischerweise 0,5 - 5 Gew.%, bevorzugt 0,7 - 2 Gew.%, besonders bevorzugt 1,0 - 1,5 Gew.%.

Bei dem PET im Sinne der Erfindung handelt es sich um alle Polyethylenterephthalate, die sich von Terephthalsäure (oder ihren reaktionsfähigen Derivaten) und Alkandiolen auf Basis von Ethylenglykol ableiten. Darunter fallen ebenfalls modifizierte Polyethylenterephthalate (Copolymere).

Bevorzugte Polyethylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykolreste.

Bevorzugte Polyethylenterephthalate sind auch Copolyester, die aus mindestens zwei Säurekomponenten und/oder aus mindestens zwei Alkoholkomponenten hergestellt sind, besonders bevorzugte Copolyester sind Poly-(ethylenglykol/butandiol-1,4)-terephthalate.

Besonders bevorzugt sind Polyethylenterephthalate, die allein aus Terephthalsäure und deren reaktionsfähigen Derivaten, wie z.B. deren Dialkylestern, und Ethylenglykol hergestellt worden sind. Bei der Polymilchsäure handelt es sich vorzugsweise um aliphatische Polyesterharze, deren Monomere durch Fermentation von Stärke, Zucker oder Kohlenhydrate gewonnen werden. Polymilchsäure ist kommerziell verfügbar z. B. von NatureWorks oder TotalEnergies Corbion und kann nach den, dem Fachmann geläufigen Verfahren, z. B. Ringöffnungspolymerisation von Lactiden, hergestellt werden. Die Herstellung von Polymilchsäure durch Ringöffnungspolymerisation von Lactiden ist auf keines der beiden Enantiomere, L-Milchsäure oder D-Milchsäure oder Mischungen daraus, beschränkt. Im Sinne der Erfindung sind dabei die Polymere aus L-Milchsäure und/oder D-Milchsäure einsetzbar.

In Bezug auf die Herstellung der Zusammensetzung aus PET und/oder Polymilchsäure (PLA) und dem monomeren Carbodiimid der Formel (I) in Dosier- und Mischaggregaten wird auf die obigen Ausführungen verwiesen.

Ein weiterer Gegenstand der vorliegenden Erfindung ist die Verwendung der erfindungsgemäßen Zusammensetzungen zur Herstellung von Formkörpern, insbesondere zur Herstellung von Mono- und Multifilamenten, Fasern, Spritzgussteilen und Folien.

Die Erfindung umfasst weiterhin Formkörper, insbesondere Mono- und Multifilamente, Faser, Spritzgussteile und Folien enthaltend die erfindungsgemäßen Zusammensetzungen oder erhältlich durch Verwendung der erfindungsgemäßen Zusammensetzungen.

Der Rahmen der Erfindung erfasst alle obenstehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele

1) Stab A: ein monomeres Carbodiimid mit einem NCN-Gehalt von ca. 10,8 Gew. % auf Basis von 2,6-Diisopropylphenylisocyanat, erhältlich bei der Lanxess Deutschland GmbH unter dem Namen Stabaxol^{®} I.
2) Stab B: ein monomeres Carbodiimid mit einem NCN-Gehalt von ca. 8,7 Gew.% auf Basis von 2,4,6-Triisopropylphenylisocyanat entsprechend der Formel 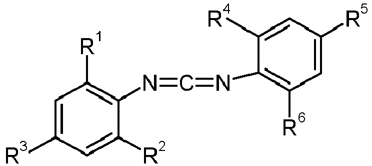 wobei R¹, R², R⁴, R³, R⁵ und R⁶ Isopropyl sind
3) Stab C: ein monomeres Carbodiimid mit einem NCN-Gehalt von ca. 13 Gew.% auf Basis von 2,6-Diethyl-phenylisocyanat
4) Stab D: ein monomeres Carbodiimid mit einem NCN-Gehalt von ca. 12 Gew.% auf Basis von 2,6-Diethyl-4-Methylphenylisocyanat entsprechend der Formel (II)
5) PET erhältlich bei der Firma Novapet S.A: mit einer intrinsischen Viskosität von ca. 0,6.
6) PLA erhältlich bei der Firma TotalEnergies Corbion (Luminy 130)
7) TPU erhältlich bei der Firma Covestro Deutschland AG (Desmopan)

### Herstellung der eingesetzten Stabilisatoren A, B, C und D

In einem ausgeheizten und mit Stickstoff befüllten 500 mL Planschliffkolben wurden unter Stickstoffstrom 400 g Isocyanat - vorgelegt und auf 140 °C erwärmt. Nach Zugabe von 400 mg 1-Methyl-phospholenoxid wurde das Reaktionsgemisch innerhalb von 5 Stunden auf 160 °C erhitzt. Im Anschluss wurde bei 160 °C solange nachreagiert bis ein NCO-Gehalt von < 1 % (entspricht > 95 % Umsatz) erreicht worden war. Das so erhaltene Rohprodukt wurde:
a) Stab A, C und D wurden mittels Destillation gereinigt.
b) Stab B wurde zusätzlich mittels Umkristallisation in Methanol/Ethanol-Mischung (1:1) gereinigt.

### Hydrolyseschutz in PET

Zur Bewertung der Hydrolyseschutzwirkung in PET wurden die eingesetzten Stabilisatoren (Stab A, B, C sowie D) in der Konzentration von 1,5 Gew. % mittels eines Labordoppelschneckenextruders ZSK 25 der Firma Werner & Pfleiderer vor der unten beschriebenen Messung in PET eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Norinprüfkörper in Wasser bei einer Temperatur von 90 °C gelagert und deren relative Reißfestigkeit in % gemessen. Für die meisten Anwendungen ist eine relative Reißfestigkeit von oberhalb 70 % notwendig.

Die Tabelle 1 zeigt die prozentuale relative Zugfestigkeit beginnend bei Tag 0 mit 100 %.

**Tabelle 1:**

| Relative Reißfestigkeit (%) | Bsp. 1 (vgl.) PET | Bsp. 2 (vgl.) PET, Stab A | Bsp. 3 (vgl.) PET, Stab B | Bsp. 4 (vgl) PET, Stab C | Bsp. 5 (erf.) PET, Stab D |
|---|---|---|---|---|---|
| 0 Tage | 100 | 100 | 100 | 100 | 100 |
| 7 Tage | 49 | 80 | 79 | 82 | 92 |
| 12 Tage | - | 50 | 36 | 54 | 71 |
| 16 Tage | | 30 | - | 20 | 50 |
| 18 Tage | | - | | - | 37 |

| | | | | | |
|---|---|---|---|---|---|
| vgl. = Vergleichsbeispiel, erf.= erfindungsgemäß | | | | | |

Die Ergebnisse zeigen, dass das erfindungsgemäße Stab D im Vergleich zu den im Stand der Technik beschriebenen monomeren Carbodiimiden Stab A, Stab B und Stab C eine verbesserte Hydrolysestabilität bei gleicher Dosierung zeigt.

### Hydrolyseschutz in PLA

Zur Bewertung der Hydrolyseschutzwirkung in PLA wurden die eingesetzten Stabilisatoren (Stab A und D) in der Konzentration von 1 Gew. % mittels eines Labordoppelschneckenextruders ZSK 25 der Firma Werner & Pfleiderer vor der unten beschriebenen Messung in PLA (Luminy L150 der Fa. TotalEnergies Corbion) eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Normprüfkörper in Wasser bei einer Temperatur von 65 °C gelagert und deren relative Reißfestigkeit in % gemessen.

Die Tabelle 2 zeigt die prozentuale relative Zugfestigkeit beginnend bei Tag 0 mit 100 %.

**Tabelle 2:**

| Relative Reißfestigkeit (%) | Bsp. 6 (vgl.) PLA | Bsp. 7 (vgl.) PLA, Stab A | Bsp. 8 (erf.) PLA, Stab D |
|---|---|---|---|
| 0 Tage | 100 | 100 | 100 |
| 7 Tage | - | 100 | 100 |
| 16 Tage | | 79 | 91 |
| 25 Tage | | 50 | 73 |
| 28 Tage | | 30 | 51 |
| 27 Tage | | - | 30 |

| | | | |
|---|---|---|---|
| vgl. = Vergleichsbeispiel, erf.= erfindungsgemäß | | | |

Die Ergebnisse zeigen, dass das erfindungsgemäße Stab D im Vergleich zu dem im Stand der Technik beschriebenen monomeren Carbodiimid Stab A eine verbesserte Hydrolysestabilität bei gleicher Dosierung zeigt.

### Hydrolyseschutz in TPU

Zur Bewertung der Hydrolyseschutzwirkung im thermoplastischen Polyurethan-Elastomer (TPU) wurden die eingesetzten Stabilisatoren (Stab A, B und D) in der Konzentration von 1,5 Gew. % mittels eines Labordoppelschneckenextruders ZSK 25 der Firma Werner & Pfleiderer vor der unten beschriebenen Messung in TPU (Desmopan 2587A der Fa. Covestro Deutschland AG) eindispergiert. Aus den gewonnenen Granulaten wurden dann die für die Messung der Reißfestigkeit verwendeten 70%-F3-Normprüfkörper an einer Spritzgießmaschine des Typs Arburg Allrounder 320 S 150 - 500 hergestellt.

Für den Hydrolysetest wurden diese 70%-F3-Normprüfkörper in Wasser bei einer Temperatur von 90 °C gelagert und deren relative Reißfestigkeit in % gemessen.

**Tabelle 3:**

| Relative Reißfestigkeit (%) | Bsp. 9 (vgl.) TPU | Bsp. 10 (vgl.) TPU, Stab A | Bsp. 11 (vgl.) TPU, Stab B | Bsp. 12 (erf.) TPU, Stab D |
|---|---|---|---|---|
| 0 Tage | 100 | 100 | 100 | 100 |
| 7 Tage | 30 | 80 | 80 | 60 |
| 14 Tage | - | 70 | 65 | 20 |
| 19 Tage | | 61 | 57 | - |
| 24 Tage | | 51 | 50 | |
| 28 Tage | | 20 | - | |

| | | | | |
|---|---|---|---|---|
| vgl. = Vergleichsbeispiel, erf.= erfindungsgemäß | | | | |

Die Ergebnisse zeigen, dass das Stab D im Vergleich zu den im Stand der Technik beschriebenen monomeren Carbodiimiden Stab A und B keine ausreichende Hydrolysestabilität im TPU Compound bei gleicher Dosierung zeigt.

## Patentansprüche

1. Zusammensetzung enthaltend Polyethylenterephthalat (PET) und/oder Polymilchsäure (PLA) mindestens ein monomeres Carbodiimid der Formel (I) 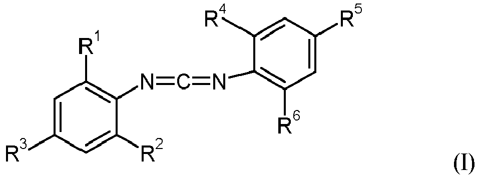
mit R¹, R², R⁴ und R⁶ = Ethyl und
R³, R⁵ gleich oder unabhängig voneinander, C₁-C₆-Alkyl.

2. Zusammensetzung gemäß Anspruch 1, **dadurch gekennzeichnet, dass** R³ und R⁵t-Butyl, i-Propyl oder Methyl sind.

3. Zusammensetzung gemäß Anspruch 1, **dadurch gekennzeichnet, dass** R³ und R⁵ Methyl sind.

4. Zusammensetzung gemäß einem oder mehreren der Ansprüche 1 bis 3, **dadurch gekennzeichnet, dass** der Anteil an Carbodiimid der Formel (I) bezogen auf die Gesamtmengen an PET und/oder PLA 0,5 - 5 Gew.%, bevorzugt 0,7 - 2 Gew.%, besonders bevorzugt 1,0 - 1,5 Gew.% beträgt.

5. Verfahren zur Herstellung einer Zusammensetzung gemäß einem oder mehreren der Ansprüche 1 bis 4, **dadurch gekennzeichnet, dass** PET und/oder PLA mit mindestens einem monomeren Carbodiimid der Formel (I) mittels Feststoffdosier- und Mischaggregaten vermischt werden.

6. Verfahren gemäß Anspruch 5, **dadurch gekennzeichnet, dass** in einem vorgelagerten Schritt das Carbodiimid der Formel (I) hergestellt wird durch Carbodiimidisierung von trisubstituierten Benzolisocyanaten der Formel (III) 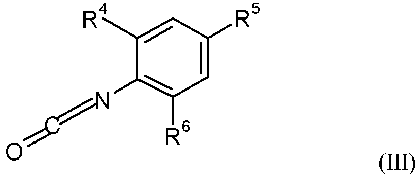 und 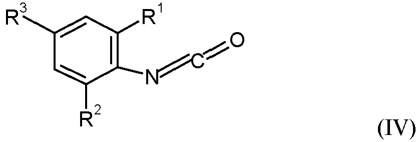
in der R¹ bis R⁶ die in Ansprüchen 1 bis 3 angegebenen Bedeutungen haben,
unter Abspaltung von Kohlendioxid bei Temperaturen von 40 °C bis 200 °C in Gegenwart von Katalysatoren und gegebenenfalls Lösungsmittel unter Abspaltung von Kohlendioxid umgesetzt und anschließende Reinigung durch Destillation und/oder Extraktion.

7. Verfahren gemäß Anspruch 6, **dadurch gekennzeichnet, dass** Carbodiimid der Formel (I) durch Destillation und anschließende Extraktion gereinigt wird.

8. Verwendung von monomeren Carbodiimiden der Formel (I) 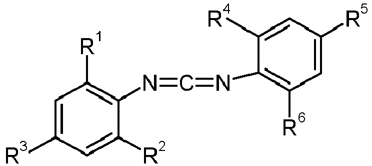
mit R¹, R², R⁴ und R⁶ = Ethyl und
R³, R⁵ gleich oder unabhängig voneinander, C₁-C₆-Alkyl, bevorzugt t-Butyl, i-Propyl oder Methyl, besonders bevorzugt Methyl,
zur Hydrolysestabilisierung von PLA und/oder PET,

9. Verwendung gemäß Anspruch 8, **dadurch gekennzeichnet, dass** R³ und R⁵ -Butyl, i-Propyl oder Methyl sind.

10. Verwendung gemäß Anspruch 8, **dadurch gekennzeichnet, dass** R³ und R⁵ Methyl sind.

11. Verwendung gemäß einem oder mehreren der Ansprüche 8 bis 10, **dadurch gekennzeichnet, dass** bezogen auf die Gesamtmengen an PET und/oder PLA 0,5 - 5 Gew.%, bevorzugt 0,7 - 2 Gew.%, besonders bevorzugt 1,0 - 1,5 Gew.% monomere Carbodiimide der Formel (I) eingesetzt werden.

12. Verwendung der Zusammensetzung nach einem der Ansprüche 1 bis 3 zur Herstellung von Formkörpern, insbesondere zur Herstellung von Mono- und Multifilamenten, Fasern, Spritzgussteilen und Folien.

13. Formkörper, insbesondere Mono- und Multifilamente, Faser, Spritzgussteile und Folien enthaltend die Zusammensetzungen gemäß einem oder mehreren der Ansprüche 1 bis 4.
